# EUROPEAN PATENT APPLICATION

(11) **EP 3 287 993 A1**
(43) Date of publication of application: **28.02.2018**
(21) Application number: 15889717.3
(22) Date of filing: 19.10.2015
(51) Int. Cl.: G07F 11/00, G06Q 20/18

(54) **RFID-BASED GOODS-VENDING SYSTEM**

(30) Priority: 24.04.2015 CN 201510202204
(71) Applicant: Guangzhou Yidao Hulianwang Co., Ltd., Guangzhou, Guangdong 510000 (CN)
(72) Inventor: WU, Tianxiang, Guangzhou, Guangdong 510030 (CN)
(74) Representative: Abel & Imray
(86) International application number: PCT/CN2015/092162
(87) International publication number: WO 2016/169234

(57) **Abstract**

An RFID-based goods-vending system, applied to a vending machine. The RFID-based goods-vending system comprises a mobile terminal (1), a server (2), a controller (3), a sensor (4), an RFID reader-writer (5), goods (6) with an RFID label and an intelligent lock (7) disposed on a vending machine. The mobile terminal (1) is used for sending a request signal to the server (2). The server (2) is used for sending, after receiving the request signal, an unlocking signal to the controller (3). The sensor (4) is used for sending, after detecting that a gate of the vending machine is closed, a locking signal to the controller (3). The controller (3) is used for sending the unlocking signal from the server (2) or the locking signal from the sensor (4) to the intelligent lock (7). The RFID reader-writer (5) is used for reading goods data in the vending machine, and sending the goods data to the server (2). A customer can initiate a purchase request via a mobile terminal (1), thereby achieving self-service purchase, saving purchase time, and making the operation convenient and quick.

## Description

### FIELD

The present disclosure relates to the technical field of electronic communication, and more particularly, to an RFID-based goods-vending system.

### BACKGROUND

RFID is the abbreviation of Radio Frequency Identification, i.e., radio frequency identification technology, commonly known as electronic label. The RFID is a kind of non-contact automatic recognition technology, which can identify a target object automatically through radio frequency signals and acquire relevant data. Such identification can be applied in various harsh environments without human intervention. The RFID technology can identify a high-speed moving object, and also can identify a plurality of labels at the same time, with quick and convenient operation.

The vending machine is a common device for business automation, which is not subject to time and place constraints, and able to save human resources and facilitate transactions, known as a 24-hour mini-supermarket. At present, the vending machine has become more and more popular in China, and has been widely used in various places, such as bus stations, subway stations, and office buildings. However, with a traditional vending machine, the customer needs to look at the goods while operating the touch screen during shopping. Such shopping generally cost a long time, for example, more than three minutes, which cause waste of time and inconvenience. In addition, with a traditional vending machine, the customer can only get the product goods to see the situation of the actual goods after payment, so the customer is passive, which is inconvenient for transactions.

### SUMMARY

Based on the above, an objective of the present disclosure is to provide an RFID-based goods-vending system with a simple structure and convenience in use.

In order to achieve the above objective, the present disclosure provides the following technical solutions.

An RFID-based goods-vending system is provided, applied to a vending machine, including a mobile terminal, a server, a controller, a sensor, an RFID reader-writer, goods each with an RFID label and an intelligent lock disposed on the vending machine. The mobile terminal is configured to send a request signal to the server. The server is configured to send, after receiving the request signal, an unlocking signal to the controller. The sensor is configured to send, after detecting that a gate of the vending machine is closed, a locking signal to the controller. The controller is configured to send the unlocking signal from the server or the locking signal from the sensor to the intelligent lock. The RFID reader-writer is configured to read data of the goods in the vending machine, and send the data of the goods to the server.

Further, the vending system may include s camera coupled to the controller.

Further, the vending system may include an indicator lamp coupled to the controller.

Further, the vending system may include a speaker coupled to the controller.

Further, the vending system may include a communication module, wherein the server is wirelessly connected to the controller through the communication module.

The present disclosure has the following beneficial effect:
a purchasing request may be initiated by a customer through the mobile terminal, to realize the aim of self-service purchase, which save purchasing time, and is quick and convenient to operation.

### BRIEF DESCRIPTION OF THE DRAWINGS

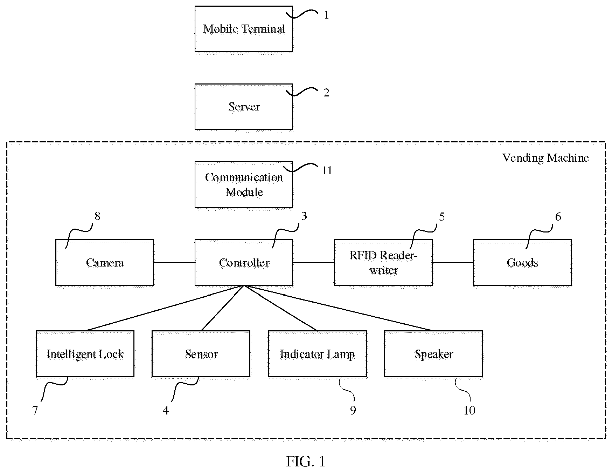

FIG. 1 is a block diagram of an embodiment of the present disclosure,
wherein, 1 denotes a mobile terminal, 2 denotes a server, 3 denotes a controller, 4 denotes a sensor, 5 denotes an RFID reader-writer, 6 denotes goods, 7 denotes an intelligent lock, 8 denotes a camera, 9 denotes an indicator lamp, 10 denotes a speaker, and 11 denotes a communication module.

### DETAILED DESCRIPTION

Technical schemes of the present disclosure will be described clearly and completely in conjunction with accompanying drawings and specific embodiments.

Referring to FIG. 1, an RFID-based goods-vending system which may be applied to a vending machine is illustrated. The RFID-based goods-vending system may mainly include a mobile terminal 1, a payment device disposed in the mobile terminal 1 or on the vending machine, a server 2, a controller 3, a sensor 4, an RFID reader-writer 5, goods each with an RFID label and an intelligent lock 7 disposed on the vending machine. The mobile terminal 1 is configured to send a request signal to the server 2. The server 2 is configured to send, after receiving the request signal, an unlocking signal to the controller 3. The sensor 4 is configured to send, after detecting that a gate of the vending machine is closed, a locking signal to the controller 3. The controller 3 is configured to send the unlocking signal from the server 2 or the locking signal from the sensor 4 to the intelligent lock 7. The RFID reader-writer 5 is configured to read data of the goods in the vending machine, and send the data of the goods to the server 2. The server 2 is further configured to receive the data of the goods from the RFID reader-writer 5, calculate the variety and quantity of the goods in the vending machine, compare the calculated variety and quantity with the result of the previous calculation to know the goods purchased by the customer, and charge the expense for the goods through the payment device. The means to calculate the quantity and variety of the goods according to the data of the goods by the server 2 is known in the art. A customer may login via the mobile terminal 1 to create a connection between the server 2 and the mobile terminal 1. A request signal which represents that the customer has a purchase demand may be sent to the server 2. The controller 3 may control the intelligent lock 7 to be locked or unlocked. For this reason, the server 2 may send the request signal to the controller 3. The controller 3 may send an unlocking signal to the intelligent lock 7 to unlock the intelligent lock 7. At this time, the customer is able to open the gate of the vending machine, and choose the goods in the machine according to his/her own preference. The customer may close the gate of the vending machine after picking out the goods. The sensor 4 may detect that the gate of the vending machine is closed, and send a locking signal to the controller 3. The controller 3 may transmit the locking signal to the intelligent lock 7 to control the intelligent lock to be locked. The gate of the vending machine has a function of shielding, so after the customer closes the gate of the vending machine after picking out the goods, the RFID reader-writer 5 is unable to read the signal from the goods picked out by the customer, but still able to read the data of the goods in the vending machine and send the data to the server 2. For this reason, the server 2 may know the variety and quantity of the goods purchased by the customer, and may charge the expense for the goods through the payment device. The purpose is to allow the customer to shop freely, by which the customer can clearly see and check the required goods before picking them out. Such means breaks the restriction of traditional vending machines that customers can only choose goods through the gate of the vending machine. In this embodiment, the RFID-based goods-vending system may further include a communication module 11. Particularly, the server 2 is wirelessly connected to the controller 2 through the communication module 11. Preferably, the model of the communication module 11 may be ATK-SIM900A. The communication module 11 of this model has multiple functions and abundant interfaces, and it is easy to assemble, with high stability. Preferably, the model of the RFID reader-writer may be ZK-RFID403. The RFID reader-writer of this model may be operated in a request-response mode, operate at a form of frequency-hopping spread spectrum or fixed-frequency transmission, and sufficiently support RFID labels meeting the requirements of various standards. The above models are preferred models, and are not tended to limit the scope of the components used in this embodiment.

In this embodiment, a payment form of automatic deduction may be used, which may be implemented by any known technology in the art. A credit system may also be provided in order to protect credit transaction to avoid the lost of the seller caused by a failure of the payment when there is no sufficient balance in the payment device. The credit system is connected to the server 2. When the payment fails, the server 2 may send a payment failure signal to the credit system, and the credit system may record and deduct the credit of the payment device of the customer.

In this embodiment, the vending system may further include an indicator lamp coupled to the controller 3. When the controller 3 controls the intelligent lock to be unlocked, the controller 3 may simultaneously control the indicator lamp 9 to glow to prompt the customer that the intelligent lock 7 has been unlocked, and the customer may open the gate of the vending machine for shopping. Further, the vending system may also include a speaker 10 coupled to the controller 3. The controller 3 may control the speaker 10 to emit a voice prompt, for example, "you are now authenticated, and please open the gate for shopping", to prompt the customer that he/she can open the gate of the vending machine to pick out the goods. Any known technology in the art may be used for the speaker 10 to emit the voice prompt. In addition, the vending system may further include a camera 8 disposed on the vending machine. The camera 8 is connected to the controller 3 and configured to monitor the situation of the vending machine in real time.

It would be understand by a person skilled in the art that various changes and modifications can be made to the embodiments described herein without departing from the scope of the present disclosure.

## Claims

1. An RFID-based goods-vending system, applied to a vending machine, comprising a mobile terminal, a server, a controller, a sensor, an RFID reader-writer, goods each with an RFID label and an intelligent lock disposed on the vending machine,
wherein the mobile terminal is configured to send a request signal to the server,
the server is configured to send, after receiving the request signal, an unlocking signal to the controller,
the sensor is configured to send, after detecting that a gate of the vending machine is closed, a locking signal to the controller,
the controller is configured to send the unlocking signal from the server or the locking signal from the sensor to the intelligent lock, and
the RFID reader-writer is configured to read data of the goods in the vending machine, and send the data of the goods to the server.

2. The RFID-based goods-vending system of claim 1, applied to vending machines, further includes a camera coupled to the controller.

3. The RFID-based goods-vending system of claim 1, applied to vending machines, further comprising an indicator lamp coupled to the controller.

4. The RFID-based goods-vending system of claim 1, applied to vending machines, further comprising a speaker coupled to the controller.

5. The RFID-based goods-vending system of claim 1, applied to vending machines, further comprising a communication module, wherein the server is wirelessly connected to the controller through the communication module.
